# EUROPÄISCHE PATENTSCHRIFT

(11) **EP 3 674 149 B1**
(45) Veröffentlichungstag und Bekanntmachung des Hinweises auf die Patenterteilung: **18.08.2021**
(21) Anmeldenummer: 19218760.7
(22) Anmeldetag: 20.12.2019
(51) Int. Cl.: B60S 1/38, B60S 1/52

(54) **WISCHBLATTADAPTER MIT INTEGRIERTEN FLUIDLEITUNGEN**
WIPER BLADE ADAPTER WITH INTEGRATED FLUID CONDUITS
ADAPTATEUR DE LAME D'ESSUIE-GLACE POURVU DE CONDUITES DE FLUIDE INTÉGRÉES

(30) Priorität: 28.12.2018 DE 102018251762
(43) Veröffentlichungstag der Anmeldung: 01.07.2020
(73) Patentinhaber: Robert Bosch GmbH, 70442 Stuttgart (DE)
(72) Erfinder: Campsteyn, Matthew, 3730 Hoeselt (BE); Depondt, Helmut, 3370 Boutersem (BE)

(56) Entgegenhaltungen:
- EP-A1- 2 692 598
- DE-A1-102010 025 688
- FR-A1- 2 962 091

## Beschreibung

### Stand der Technik

Die Erfindung betrifft einen Wischblattadapter mit integrierten Fluidleitungen nach der Gattung des unabhängigen Anspruchs.

Ein Wischblatt wird mit einem Wischarm über einen Wischblattadapter verbunden, um die Montage des Wischblattes am Fahrzeug und das Wechseln zu ermöglichen. Der Wischblattadapter dient dazu, die seitlichen Führungskräfte von dem Wischarm bei der Wischbewegung auf das Wischblatt zu übertragen. Zusätzlich ermöglicht ein Wischblattadapter häufig eine Drehbewegung, damit sich das Wischblatt der Neigung und Krümmung der Scheibe während der Wischbewegung anpassen kann. Dabei sind zweiteilige Ausführungen bekannt, bei denen der Wischblattadapter ein Drehgelenk umfasst, aber auch Ausführungen, bei denen die Verbindung mit dem Wischarm an einer Achse erfolgt, die eine Drehung ermöglicht und auf die Aufnahmeelemente des Wischarms lösbar aufgesetzt werden können.

Im Stand der Technik sind weiter Wischblätter bekannt, die Düsen zur Ausbringung eines Reinigungsfluids auf eine Scheibe aufweisen und bei denen durch den Wischblattadapter Fluidzuleitungen zum Wischarm geführt werden und an dem Wischblattadapter lösbar verbunden werden können. Die Versorgung der Düsen in dem Wischblatt, beispielsweise in den Endbereichen des Wischblattes, erfordert dabei eine Verteilerfluidleitung längs des Wischblattes. Der Adapter besitzt in diesem Fall waagrechte Auslassfluidleitungen, die mit solchen Verteilerfluidleitungen, beispielsweise ausgeformt in einem Spoiler, verbunden werden. Zugleich wird im oberen Bereich des Wischblattadapters aus dem Wischarm eine Fluidleitung zugeführt. Für diese befindet sich eine im Wesentlichen waagrecht liegende Zuflussfluidleitung mit Anschlüssen in dem Wischblattadapter. Wenn nun der Wischblattadapter als ein Bauteil durch Kunststoffspritzguss hergestellt wird und die Fluidleitungen innerhalb des Wischblattadapters in dieses Kunststoffspritzgussteil integriert werden, müssen Verbindungskanäle zwischen diesen unteren Auslassfluidleitungen und der oder den oberen Zuflussfluidleitungen vorgesehen werden. Bei bekannten und in großer Serie angewandten Verfahren zur Herstellung solcher Hohlkanäle in Spritzgussteilen werden jedoch Kerne an dem Werkzeug vorgesehen, die beim Entformen herausgezogen werden müssen. Dies führt dazu, dass die Verbindungskanäle an einer Seite, entweder unten oder oben, an der sie mit den Auslassfluidleitungen oder Zuflussfluidleitungen verbunden sind nach der Herstellung offen sind und abgedichtet werden müssen.

Aus der US 2015/0217731 A1 ist eine Verbindungsvorrichtung zur Verbindung eines Wischblattes mit einem Wischarm bekannt, die zumindest Mittel zur festen Verbindung mit dem Wischblatt und Anschlussmittel für den Wischarm aufweist. Weiterhin umfasst die Verbindungsvorrichtung eine Leitung für eine Waschflüssigkeit mit einer Mehrzahl von Sprühöffnungen zum Aufbringen von Waschflüssigkeit auf die Scheibe. In einem Ausführungsbeispiel ist zwischen einer Zuleitung und einer Verteilerleitung ein Verbindungskanal beschrieben, der an seinem unteren Ende eine Muffe aufweist. Diese entsteht dadurch, dass bei der Produktion die Öffnung des Verbindungskanals versiegelt werden muss, beispielsweise durch Ultraschallschweißen oder Einsetzen eines Dichtungsballs.

Aus der US 2011/0107541 A1 ist ein Verbindungselement für ein Wischblatt bekannt, dass auch ein hydraulisches Verbindungselement ist. Das Verbindungselement weist eine interne Leitung auf, um von einem oben waagrecht angeordneten Einlass die Flüssigkeit zu einer unteren Verteilerleitung zu leiten. Dabei ist das Verbindungselement in einem Ausführungsbeispiel in der Ebene dieser internen Leitungen, die senkrecht angeordnet sind, geteilt, um dieses herstellen zu können. Die Teile können durch Ultraschallschweißen oder gemeinsames Überspritzen verbunden werden.

Aus der FR 2 962 091 A1 ist darüber hinaus ein gattungsgemäßer Wischblattadapter mit den Merkmalen des Oberbegriffs bekannt geworden.

### OFFENBARUNG DER ERFINDUNG

Der Wischblattadapter mit den Merkmalen des Hauptanspruchs 1 hat den Vorteil, dass die Dichtungsabdeckung alle Öffnungen der Verbindungskanäle als ein Bauteil gemeinsam überdeckt und, wenn sie eingesetzt wird, in einem Montageschritt alle abdichtet. Beim Entformen des Wischblattadapters aus der Spritzgussform entstehen Öffnungen der Verbindungskanäle die nicht erwünscht sind, sich jedoch nicht vermeiden lassen da im Wesentlichen beispielsweise an einer Oberseite und bis auf eine geringe Winkelabweichung parallel zu einer Scheibenfläche ausgerichtete Zuflussfluidleitungen mit ebenso ausgerichteten, jedoch weiter unten liegenden Verteilerfluidleitungen verbunden werden müssen. Die hierfür erforderlichen Verbindungskanäle müssen im Spritzgusswerkzeug unter Zuhilfenahme eines Kerns gebildet werden, der beim Herausziehen nach einer Seite beim Entformen ein unerwünschte Öffnung hinterlässt. Durch den Einsatz einer Dichtungsabdeckung kann auf kostengünstige Weise mit kurzer Montagezeit und in einem Montageschritt eine Abdichtung aller Öffnungen erfolgen, die zuverlässig ist. Insbesondere ergeben sich Kostenvorteile gegenüber einem weiteren Bearbeitungsschritt, in dem beispielsweise durch Kunststoffschweißen mit größerem Zeitaufwand die Öffnungen einzelnen verschlossen werden müssten.

Durch die in den Unteransprüchen aufgeführten Maßnahmen ergeben sich weiterhin vorteilhafte Weiterbildungen und Verbesserungen der in dem Hauptanspruch angegebenen Merkmale.

Vorteilhaft bestehen die Dichtungselemente aus Verschlussstopfen, insbesondere aus angespritzten thermoplastischen Elastomermaterialien. Dadurch kann eine besonders zuverlässige Abdichtung erreicht werden.

In einer Ausgestaltung ist die Dichtungsabdeckung an einer Oberseite angeordnet. Es ist auch denkbar, eine Dichtungsabdeckung an der Unterseite einzusetzen. Besonders vorteilhaft ergeben sich jedoch an der Oberseite bessere Platzverhältnisse zum Einsatz der Dichtungsabdeckung.

Nach der Erfindung, weist die Dichtungsabdeckung zwei jeweils zu gegenüberliegenden Seiten hin einseitig freie Federbügel auf, die in Rastnasen des Wischblattadapters einrasten und die Dichtungsabdeckung auf die Öffnungen drücken. Dies ergibt eine sehr einfache Befestigung bei der Montage und eine definierte Anpresskraft, die die Abdichtung der Öffnungen sicherstellt.

Die Dichtungsabdeckung kann ein Kunststoffspritzteil und die Federbügel können angeformt sein.

In einer vorteilhaften Ausgestaltung ist die Dichtungsabdeckung zwischen zwei Wandabschnitten geführt positioniert und sind in den Wandabschnitten die Rastnasen angeordnet.

In einer Ausgestaltung können insgesamt vier Verbindungskanäle zwei Zuflussfluidleitungen und vier Verteilerfluidleitungen verbinden.

### Beschreibung der Zeichnungen

Ausführungsbeispiele sind in den Zeichnungen dargestellt und in der nachfolgenden Beschreibung näher erläutert. Es zeigen:
Fig. 1 einen Wischblattadapter an einem Wischblatt,
Fig. 2 den Wischblattadapter und
Fig. 3 den Wischblattadapter mit einer Dichtungsabdeckung.

### Beschreibung der Ausführungsbeispiele

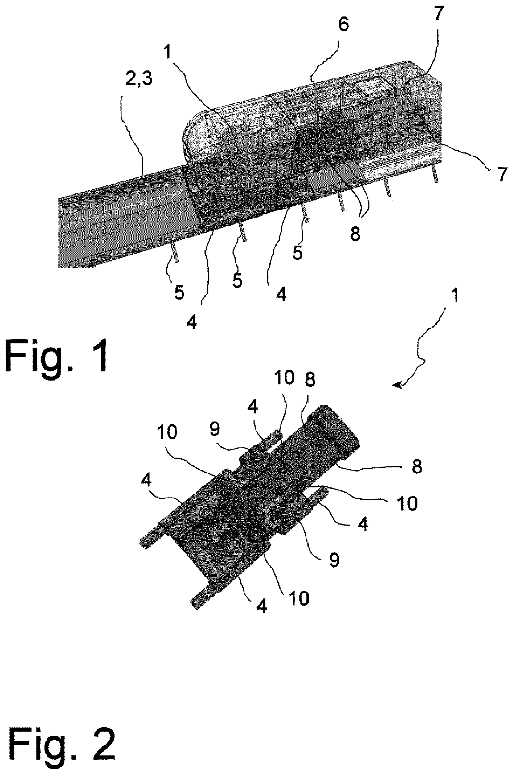

Die Fig. 1 zeigt einen Wischblattadapter 1 an einem Wischblatt 2 der einen Spoiler 3 hat, in dem sich wiederum eine Fluidleitung befindet. Ein Verteilerfluidleitung 4 ist mit dieser verbunden und an der Kante des Wischblattes 2 sind Düsen ausgebildet, mit denen Reinigungsfluid 5 auf eine Scheibe gespritzt werden kann, wie in der Zeichnung angedeutet. In der Darstellung ist auf den Wischblattadapter 1 ein Kopf 6 eines Wischarms aufgesetzt, wobei zugleich zwei Fluidleitungen 7 des Wischarms an Zuflussfluidleitungen 8 des Wischblattadapters 3 angeschlossen sind.

Die Fig. 2 zeigt den Wischblattadapter 1 mit den Zuflussfluidleitungen 8 und den Verteilerfluidleitungen 4, die durch Verbindungskanäle 9 verbunden sind. An der Oberseite der Verbindungskanäle 9 ergeben sich Öffnungen 10.

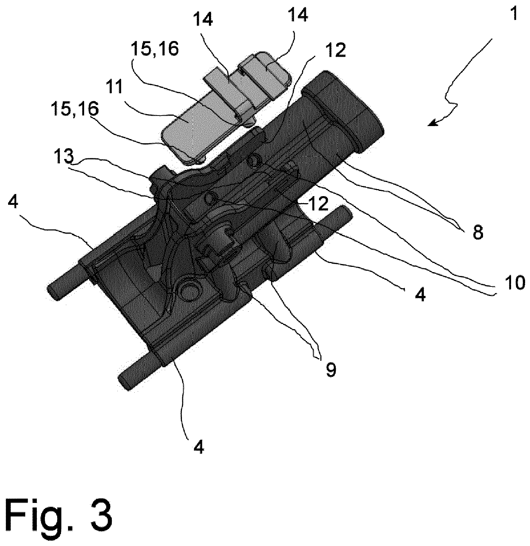

Die Fig. 3 zeigt den Wischblattadapter 1 mit einer Dichtungsabdeckung 11 und den Zuflussfluidleitungen 8, den Verteilerfluidleitungen 4 und den Verbindungskanälen 9 sowie den Öffnungen 10. Zwei Wandabschnitte 12 weisen Rastnasen 13 auf und die Dichtungsabdeckung 11 Federbügel 14, die in die Rastnasen 13 einrasten, wenn die Dichtungsabdeckung 11 zwischen den Wandabschnitten 12 in ihre Montageposition über den Öffnungen 10 gedrückt wird. Durch diese Rastverbindung wird die Dichtungsabdeckung 11 in der Montageposition gehalten. Durch Verschlussstopfen 15 als Dichtungselemente 16 dichtet die Dichtungsabdeckung 11 alle Öffnungen 10 in der Montageposition ab.

## Patentansprüche

1. Wischblattadapter mit integrierten Fluidleitungen (4,8,9), der zur Verbindung eines Wischblattes (2) mit einem Wischarm dient, wobei der Wischblattadapter (1) als Spritzgussteil aus einem Kunststoff hergestellt ist und eine oder mehrere Verteilerfluidleitungen (4) und weiterhin eine oder mehrere Zuflussfluidleitungen (8) für einen Anschluss an eine Fluidleitung (7) eines Wischarms aufweist, sowie mindestens zwei Verbindungskanälen (9) zwischen Zuflussfluidleitungen (8) und Verteilerfluidleitungen (4), wobei auf einer Seite die Verbindungskanäle (9) eine Öffnung (10) ins Freie aufweisen, eine Dichtungsabdeckung (11) alle Öffnungen (10) als getrenntes Bauteil gemeinsam überdeckt und mit Dichtungselementen (16) abdichtet, **dadurch gekennzeichnet,**
**dass** die Dichtungsabdeckung (11) zwei jeweils zu gegenüberliegenden Seiten hin einseitig freie Federbügel (14) aufweist, die in Rastnasen (13) des Wischblattadapters (1) einrasten und die Dichtungsabdeckung (11) auf die Öffnungen (10) drücken.

2. Wischblattadapter nach Anspruch 1,
**dadurch gekennzeichnet,**
**dass** die Dichtungselemente (16) aus Verschlussstopfen (15) bestehen, insbesondere aus angespritzten thermoplastischen Elastomermaterialien.

3. Wischblattadapter nach Anspruch 1 oder 2,
**dadurch gekennzeichnet,**
**dass** die Dichtungsabdeckung (11) an einer Oberseite angeordnet ist.

4. Wischblattadapter nach Anspruch 1,
**dadurch gekennzeichnet,**
**dass** die Dichtungsabdeckung (11) ein Kunststoffspritzteil ist und die Federbügel (14) angeformt sind.

5. Wischblattadapter nach Anspruch 1,
**dadurch gekennzeichnet,**
**dass** die Dichtungsabdeckung (11) zwischen zwei Wandabschnitten (12) geführt positioniert ist und in den Wandabschnitten (12) die Rastnasen (12) angeordnet sind.

6. Wischblattadapter nach einem der vorhergehenden Ansprüche,
**dadurch gekennzeichnet,**
**dass** insgesamt vier Verbindungskanäle (9) zwei Zuflussfluidleitungen (8) und vier Verteilerfluidleitungen (4) verbinden.

## Claims

1. Wiper blade adapter with integrated fluid lines (4, 8, 9), which serves to connect a wiper blade (2) to a wiper arm, wherein the wiper blade adapter (1) is produced in the form of an injection moulded part made of a plastic and has one or more distributor fluid lines (4) and furthermore one or more inflow fluid lines (8) for connection to a fluid line (7) of a wiper arm, and at least two connecting channels (9) between inflow fluid lines (8) and distributor fluid lines (4), wherein, on one side, the connecting channels (9) have an opening (10) into the open air, a sealing covering (11) as a separate component jointly covers all the openings (10) and seals same with sealing elements (16), **characterized in that** the sealing covering (11) has two spring clips (14) which are free on one side in each case towards opposite sides and latch into latching lugs (13) of the wiper blade adapter (1) and press the sealing covering (11) onto the openings (10).

2. Wiper blade adapter according to Claim 1,
**characterized**
**in that** the sealing elements (16) consist of closure stoppers (15), in particular of thermoplastic elastomer materials which are moulded thereon.

3. Wiper blade adapter according to Claim 1 or 2,
**characterized**
**in that** the sealing covering (11) is arranged on an upper side.

4. Wiper blade adapter according to Claim 1,
**characterized**
**in that** the sealing covering (11) is a plastics injection moulded part and the spring clips (14) are formed integrally thereon.

5. Wiper blade adapter according to Claim 1,
**characterized**
**in that** the sealing covering (11) is positioned in a manner guided between two wall portions (12) and the latching lugs (12) are arranged in the wall portions (12).

6. Wiper blade adapter according to one of the preceding claims,
**characterized**
**in that** a total of four connecting channels (9) connect two inflow fluid lines (8) and four distributor fluid lines (4).

## Revendications

1. Adaptateur de balai d'essuie-glace muni de conduites de fluide intégrées (4, 8, 9) qui sert à relier un balai d'essuie-glace (2) à un bras d'essuie-glace, l'adaptateur de balai d'essuie-glace (1) étant réalisé sous la forme d'une pièce moulée par injection à partir d'une matière synthétique et comportant une ou plusieurs conduites de fluide de distribution (4) et en outre une ou plusieurs conduites de fluide d'entrée (8) destinées au raccordement à une conduite de fluide (7) d'un bras d'essuie-glace, ainsi que d'au moins deux canaux de liaison (9) entre les conduites de fluide d'entrée (8) et les conduites de fluide de distribution (4), les canaux de liaison (9) comportant d'un côté une ouverture (10) vers l'extérieur, un couvercle d'étanchéité (11) recouvrant toutes les ouvertures (10) ensemble sous la forme d'un composant séparé et réalisant l'étanchéité au moyen d'éléments d'étanchéité (16), **caractérisé en ce que**
le couvercle d'étanchéité (11) comporte sur des côtés opposés deux étriers à ressort (14) libres d'un côté qui s'encliquètent dans des ergots d'encliquetage (13) de l'adaptateur de balai d'essuie-glace (1) et qui pressent le couvercle d'étanchéité (11) sur les ouvertures (10).

2. Adaptateur de balai d'essuie-glace selon la revendication 1,
**caractérisé en ce que**
les éléments d'étanchéité (16) sont des bouchons de fermeture (15), en particulier en matériaux élastomères thermoplastiques surmoulés par injection.

3. Adaptateur de balai d'essuie-glace selon la revendication 1 ou 2,
**caractérisé en ce que**
le couvercle d'étanchéité (11) est disposé sur une face supérieure.

4. Adaptateur de balai d'essuie-glace selon la revendication 1,
**caractérisé en ce que**
le couvercle d'étanchéité (11) est une pièce en matière synthétique moulée par injection et les étriers à ressort (14) sont surmoulés.

5. Adaptateur de balai d'essuie-glace selon la revendication 1,
**caractérisé en ce que**
le couvercle d'étanchéité (11) est positionné en étant guidé entre deux portions de paroi (12) et les ergots d'encliquetage (12) sont disposés dans les portions de paroi (12).

6. Adaptateur de balai d'essuie-glace selon l'une des revendications précédentes,
**caractérisé en ce que**
un total de quatre canaux de liaison (9) relient deux conduites de fluide d'entrée (8) et quatre conduites de fluide de distribution (4).
